Europäisches Patentamt

European Patent Office

Office européen des brevets

(19)

(11) Publication number: **0 375 640**
**A2**

# EUROPEAN PATENT APPLICATION

(12)

(21) Application number: 89830568.5

(51) Int. Cl.5: **G01S 17/88, G01N 21/47**

(22) Date of filing: 22.12.89

(30) Priority: 23.12.88 IT 6815588

(43) Date of publication of application:
27.06.90 Bulletin 90/26

(84) Designated Contracting States:
AT BE CH DE ES FR GB GR IT LI LU NL SE

(71) Applicant: Flesia, Cristina
96 avenue C.F. Camuz
CH-1009 Pully(CH)

(72) Inventor: Flesia, Cristina
96 avenue C.F. Camuz
CH-1009 Pully(CH)

(74) Representative: Bosotti, Luciano et al
c/o Jacobacci-Casetta & Perani S.p.A. Via
Alfieri, 17
I-10121 Torino(IT)

(54) Method for determining the characteristics of diffusion sources interacting with a wave, particularly in LIDAR systems for investigation on the atmosphere and related device.

(57) The probability distribution of the dimensions of scattering sources is calculated by the measurement (5 to 7) of their coefficient of attenuation for several wavelengths. In the case of sources having the same dimensions, the probability distribution of any other stochastic variable connected with the scattering process can be calculated.

The preferred application is in lidar techniques for the remote measurement of the distribution of the dimensions of aerosols in the atmosphere, and in particular of water droplets in clouds, by the analysis of the intensity of the back scattering.

EP 0 375 640 A2

# A method for determining the characteristics of scattering sources struck by a wave, particularly for lidar systems for studying the atmosphere, and a corresponding device

## Background of the invention

The present invention relates to methods for determining the characteristics (dimensions, refractive index, etc....) of scattering sources struck by a wave.

The present invention has been developed with particular attention to its possible use in lidar techniques for the remote measurement of the distribution of dimensions of aerosols present in the atmosphere, particularly water droplets in clouds.

In more general terms, however, the present invention is applicable to other investigative techniques which use electromagnetic waves (for example radar or X-ray techniques, etc.) or elastic waves (for example ultrasound or sonar techniques, etc.) and in which it is necessary to study the problem of the scattering of a plane wave of generic wavelength by a stochastic set of scatterers with dimensions and/or possibly other characteristics of a random nature.

For example, the lidar technique makes use of a laser beam which is sent into the atmosphere and is scattered in all directions by particles in the air (aerosols, water droplets, etc.).

The lidar technique uses a measurement of the intensity of the light scattered back by the particles in the air in order to try to determine, inter alia, the concentration and probability distribution of the dimensions of the particules. Moreover, if the laser light used is pulsed, it is possible to measure the intensity of the back scattering as a function of distance and to provide spatial resolution. Spatial resolution is particularly important when the dimensional distribution of the particles is not homogeneous (for example in local pollution zones or within a cloud). In all these cases, vertical analysis of the dimensional distribution of the aerosols or droplets (that is of the scattering source) provides valuable information about the system.

## Description of the prior art

In any problem concerning the scattering of a plane wave (electromagentic waves such as radio waves or X-rays, or elastic waves such as ultrasound waves, or quantum waves such as electron beams, neutron beams, etc.) of generic wavelength $\lambda$ by a stochastic set of wave-scattering sources whose dimensions a are random, the coefficient of attenuation $\alpha (\lambda,\theta)$ where $\theta$ is the scattering angle, that is the angle between the direction of incidence of the wave and the direction of observation, will depend, in particular, on the nature of the scatterers (shape, dimension, orientation, refractive index, constituent material, etc.). In general, the coefficient of attentuation $\alpha(\lambda,\theta)$ calculated for an angle $\theta$ other than $180^\circ$ can be expressed as a function of the differential cross-section

$$Q_{\lambda,\theta}^{scatt}(a)$$

and of the probability distribution R (a) of the dimensions of the scatterers by an equation of the type:

$$\alpha(\lambda,\theta) = \int_0^\infty Q_{\lambda,\theta}^{scatt}(a)p(a)da \qquad (1)$$

where $p(a)$ is the probability density associated with the probability distribution R (a) $[p(a) = R'(a)]$ which describes the concentration of the scatterers as a function of their dimensions.

In particular, when $\theta = 0$, the coefficient $\alpha$ assumes the name of 'back-scattering coefficient' $\beta_\lambda^M$.

That is, $\beta^M(\lambda) = \alpha(\lambda,\theta)_{\theta=0}$

When $\theta = 180^\circ$, the coefficient of attenuation $\alpha$ which, in this particular case is called the extinction coefficient $\alpha^{ext,M}(\lambda)$, will be given by the equation

$$\alpha(\lambda,\theta)_{\theta=180^\circ} = \alpha^{ext,M}(\lambda) = \int \sigma_\lambda^{ext,M}(a)\cdot p(a)\, da \quad (2)$$

where this time

$$\sigma_\lambda^{ext}(a)$$

is the total cross-section of extinction.

The functions

$$\Omega_{\lambda,\theta}^{scatt} \quad \text{and} \quad \sigma_\lambda^{ext,M}$$

are determined by the specific problem under consideration and their analytical form is, in general, universally known. For information, as regards the case of electromagnetic waves, reference may be made, for example, to the volume "Absorption and Scattering of Light by Small Particles" by Bohren and Huffman, John Wiley & Sons, 1983.

Since the coefficient $\alpha(\lambda,\theta)$ depends on the probability distribution R (a) of the dimensions of the scattering sources, it will reflect the combined effect of all the particles which take part in the scattering process. The problem of determining the probability distribution R (a) from a knowledge of the measured value of $\alpha(\lambda,\theta)$ alone, thus becomes highly undetermined. On the other hand, however, the measurement of $\alpha(\lambda,\theta)$ as a function of $\lambda$ and of $\theta$ can easily be achieved by known spectroscopic techniques. In this connection see, for example, "Optique" (Optics) by G. Bruhat, Masson, 1954 or "Modern Aspects of Microwave Spectroscopy", by G.W. Chantry, Academic Press, 1979. For example if $\theta$ is 180°, the so-called Lambert-Beer law applies in which the intensity I of the transmitted wave can be expressed as a function of the incident intensity $I_o$ and of $\alpha$ according to the formula

$$I = I_o e^{-2\alpha 1} \quad (3)$$

where 1 is the distance over which the measurement is made. In particular, as regards the lidar technique, from an analysis of the back-scattering process, it may be noted that the number of photons $M(D,\lambda)$ scattered back from a layer of back-scattering sources of thickness $\Delta D$ situated at a distance D can be expressed in the form:

$$M(D,\lambda) = M_o(\lambda)\cdot\frac{A_o}{D^2} \quad \beta(\lambda)\,\Delta D\,\xi(D,\lambda)\cdot\exp(-2D\alpha^{ext}(\lambda)) \quad (4)$$

where:

$M_o(\lambda)$ is the initial number of photons output by the laser used for the investigation,

$A_o$ is the surface area of the detector,

$\Delta D$ is the spatial resolution of the system, which is limited by the duration of the laser pulses $\tau$ ( $\Delta D$ = c $\times \tau$ 2 , where c is the speed of light in the medium ),

$\beta(\lambda)$ is the backscattering coefficient

$\xi(D,\lambda)$ is a coefficient of the detection efficiency, and

$\alpha^{ext}(\lambda)$ is the so-called coefficient of total atmospheric extinction.

More precisely, the coefficients $\alpha(\lambda)$ and $\beta(\lambda)$ can be expressed in the form;

$$\alpha^{ext}(\lambda) = \alpha^{ext,R}(\lambda) + \alpha^{ext,M}(\lambda) \quad (5)$$

$$\beta(\lambda) = \beta^R(\lambda) + \beta^M(\lambda) \quad (6)$$

where $\alpha^{ext,R}(\lambda)$ and $\beta^R(\lambda)$ respectively are the atmospheric extinction coefficient and the coefficient of the back scattering due to Rayleigh scattering by the gas molecules present in the atmosphere, which are both calculable by known techniques.

The terms $\alpha^{ext,M}(\lambda)$ and $\beta^M(\lambda)$ are those defined above, but these depend on the probability density $\rho$ (a) which describes the concentrations of the scatterers as a function of their dimensions, the total extinction cross-section

$$\delta_\lambda^{ext,M}$$

and the differential cross-section of the back scattering direction

$$Q_{\lambda,\theta}^{scatt}(a)$$

when $\theta = 0$.

For a more detailed description of the derivation and implications of the above formulae, reference may be made, for example, to the text "Laser Monitoring of the Atmosphere" by E.D. Hinkley, Springer, 1976.

Since the terms $\alpha^{ext,M}(\lambda)$ and $\beta^{M}(\lambda)$ depend on the probability distribution of the dimensions of the scattering sources, as has already been seen, the coefficients $\alpha^{ext,M}(\lambda)$ and $\beta^{M}(\lambda)$ reflect the combined effect of all the dimensions of the particles taking part in the scattering process.

The problem of inverting equation (4) described above in order to determine the distribution R (a) of the dimensions of the particles from the number of photons scattered back becomes a more undetermined problem since the probability distribution R( a ) appears in two terms of equation (4), that is, in $\alpha^{ext}(\lambda)$ and in $\beta(\lambda)$.

All the prior-art solutions make use of a priori hypotheses concerning the physical properties of the atmosphere (homogeneity, etc.) in order to resolve the theoretical difficulties of the inversion of equation (4) and have not, therefore, given satisfactory results as regards the modelling of the physical facts.

Objects and summary of the invention

The object of the present invention is, therefore, to provide a method for determining the characteristics (the probability distribution of the dimensions, etc...) of scattering sources struck by a wave, particularly but not exclusively for lidar systems, in which the aforesaid problems are completely eliminated, particularly as regards the ability to calculate the probability distribution of the dimensions of scattering sources without the imposition on the model used for the calculation of analytical restraints which are not actually encountered in physical reality.

According to the present invention, this object is achieved by virtue of a method and a device having the characteristics recited more specifically in the claims which follow.

In brief, with the method according to the invention, equation (1) can be reduced to a system of n equations with n variables in which all the coefficients can be calculated a priori and are independent of the stochastic variable, by the measurement solely of the attenuation coefficient $\alpha(\lambda, \theta)$ for several wavelengths and for a given angle.

Theoretical basis of the invention

The formulae (1) and (2) seen above correspond to a generic formula for the attenuation coefficient

$$\alpha(\lambda, \theta) = \int_0^\infty f_{\lambda,\theta}(a) \cdot \rho(a)\, da \qquad . \qquad (7)$$

where the function $f_{\lambda,\theta}(a)$ is determined by the specific problem which is being considered. As seen above, its formula is commonly known and calculable.

Essentially, the present invention is based on the following basic idea: to determine the probability distribution R (a) of the dimensions (or of other random characteristics) of scattering sources from a measurement solely of the attenuation coefficient $\alpha(\lambda, \theta)$ for different wavelengths $\lambda$. The choice of the angle $\theta$ is completely arbitrary and depends solely on the experimental requirements for the measurement in the physical system under consideration.

In general, the experimental variable $\alpha$ $(\lambda, \theta)$ is not determined solely from the average value of the random characteristic considered (e.g. the dimensions) of the scatterers, nor from its fluctuation interval (variance), but from the overall properties of the probability distribution R(a) which describes it.

The quantity $\alpha$ $(\lambda, \theta)$ is thus determined from the whole set of parameters which define the probability distribution of the random variable.

A very thorough method of studying a generic distribution function is to study the integral transformations which define its moments $m_j$ $(j = 0, \infty)$.

In particular, when $j = 1$, $m_1$ defines the average value of the distribution and when $j = 2$, $m_2$ defines its variance.

By this method it is possible to substitute the expression for $\rho$ (a) in equation (7) above.

Thus

$$\alpha(\lambda, \theta) = \frac{1}{2\pi} \int_0^\infty da \cdot f_{\lambda,\theta}(a) \cdot \int_{-\infty}^{+\infty} e^{-ita} f(t) dt \quad (8)$$

where f(t) is the characteristic function of the distribution function R (a).

The above expansion, as well as the conditions under which it is permissible, are well known in the art. See, for example, "Characteristic Functions" by E. Lukacs, Griffin, 1970.

With the use, at this point, of the properties of characteristic functions, it may be written that

$$\alpha(\lambda, \theta) = \sum_{j=0}^{\infty} \frac{m_j}{j!} f_{\lambda,\theta}^{(j)}(0) = \sum_{j=0}^{\infty} m_j \cdot c_j \quad (9)$$

where $m_j$ are the moments (non central) of the probability distribution R (a) and

$$f_{\lambda,\theta}^{(j)}(0)$$

is the j - order derivative of $f_{\lambda,\theta}$ (a) with respect to a, calculated at the point a $= 0$. The integral (7) can thus be expressed in the form of an infinite series whose unknowns are the moments $m_j$.

From equation (9) it can be seen that the coefficients

$$c_j = \frac{f_{\lambda,\theta}^{(j)}(0)}{j!}$$

no longer depend on the random characteristic of the scattering sources under examination (for example the dimension a).

This eliminates the uncertainty of the initial equation (1) and enables it to be reduced, by means of the measurement of the coefficient $\alpha$ $(\lambda, \theta)$ for different wavelengths $\lambda$ , to a system of n algebraic equations whose n variables are the moments of the unknown distribution probability R (a) and whose coefficients can be calculated a priori since they are independent of the stochastic variable.

Since the probability distribution R (a) is determined from the set of its moments (see, for example, the text "The Problem of Moments" by Shohat and Tamarkin, American Mathematic Society, 1943), the solution to such a system of equations thus enables R(a) to be determined with an accuracy which depends solely on the number n of wavelengths used.

On the other hand, for each specific system, a test of convergence of the value of any moment $m_j$ in dependence on n gives a very precise estimate of the accuracy of the results obtained.

The method described does not therefore operate on an a priori hypothesis concerning the physical properties of the system considered but depends solely on the actual characteristics of the medium.

This method is equally valid for any stochastic variable which defines the random set of scatterers.

For example, the case of a set of scattering sources of identical dimensions but with random refractive indices can, naturally, be handled by the same method.

Should there be two or more random variables present simultaneously in the same system (dimensions and refractive indices of the scattering sources, for example) a double expansion or a multiple expansion may be carried out.

In general, the application of the method just described to the lidar system equation (4) gives the probability distribution R(a) of the scattering sources, without imposing any a priori hypothesis as regards the coefficients $\alpha$ and $\beta$ .

In particular, for a given wavelength $\lambda_i$ the formula (4) given above may be rewritten in the following form:

$$\frac{M(D, \lambda_i)}{\beta(\lambda_i)} = K_i \cdot exp(-2D\alpha^{ext}(\lambda_i)) \qquad (10)$$

where $M(D, \lambda_i)$ is the intensity of the back scattering (the number of photons scattered back), which is measurable, and

$$K_i = \frac{M_0(\lambda_i) \cdot A_0}{D^2} \cdot \Delta D \, \zeta(D, \lambda_i)$$

By applying the expansion (9) to $\alpha^{ext}(\lambda_i)$ and $\beta(\lambda_i)$, also taking into account equations (1), (2), (5) and (6), the following is obtained:

$$\frac{M(D, \lambda_i)}{\beta^R(\lambda_i) + \sum_{j=0}^{\infty} Q^{(j)scatt}_{\lambda_i} \, \theta/_{\theta=0}(0) \cdot \frac{m_j}{j!}} = K_i \cdot exp\left[-2D\left(\alpha^{ext,R}(\lambda_i) + \sum_{j=0}^{\infty} \delta^{(j)ext,M}_{\lambda}(0) \cdot \frac{m_j}{j!}\right)\right]$$

$$(11)$$

where $m_j$ are the moments of the probability distribution which describes the dimensions of the particles.

The measurement of the intensity of back scattering $M(D, \lambda)$ for several wavelengths $\lambda_i$, $i = 1, \ldots\ldots n$ thus enables the equation (11) to be reduced to a system of n non-linear algebraic equations which have n variables and whose 2n coefficients can all be calculated a priori and independently of the stochastic variable a.

Thus, assuming that the particles have the same dimensions, the probability distribution of the refractive indices of the particles, or of any other stochastic variable present in the system, can be calculated.


Detailed description of one example of application of the invention

The description of the method of the invention given above will now be extended further by a detailed description of a typical example of its application to a lidar system.

This description, which is given purely by way of non-limiting example, relates to the appended drawing, which shows the general structure of a lidar system operating according to the invention

6

schematically in the form of a block diagram.

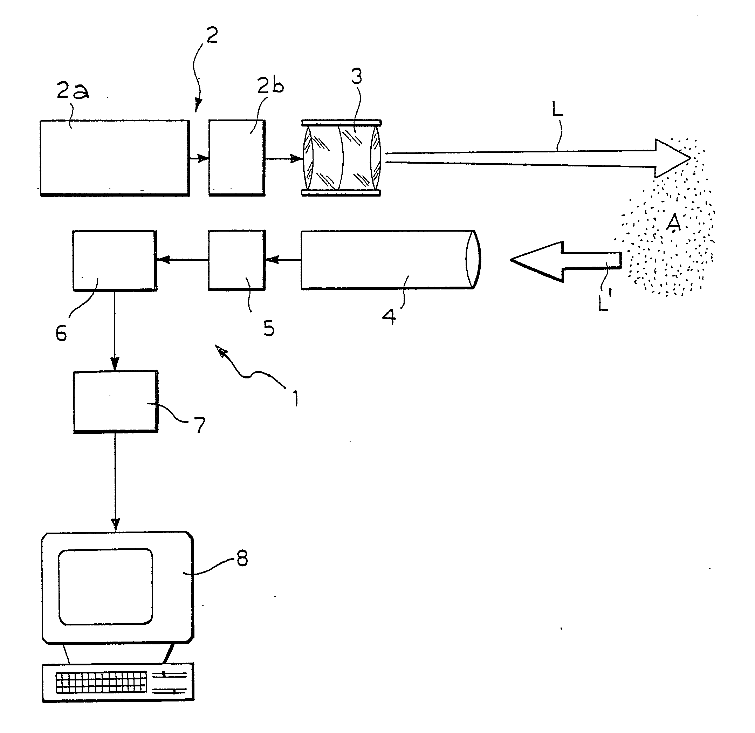

In Figure 1, a system usable for investigating the atmosphere and which operates by the lidar technique is generally indicated 1.

In particular, the system may be used for the remote measurement of the distribution of the dimensions of aerosols in the atmosphere and, particularly, of the water droplets in clouds. Such a measurement is of supreme importance in all fields connected with meteorology or atmospheric pollution.

In the system 1, a laser, indicated 2, is intended to project a collimated beam of radiation L into the atmosphere through a lens 3, the beam being scattered back at least partially by the atmosphere A.

The back-scattering phenomenon is based on the presence of scattering sources, such as aerosols and water droplets, for example those in a cloud, in the atmosphere.

The back-scattered radiation $L'$ is focussed by a telescope 4 on to a photo-electric pick-up or detector 5 whose output signal, which is indicative of the intensity of the back-scattered radiation, that is the term $M(D, \lambda_i)$ in equation (10), is fed to an amplifier 6 and is then transmitted, after conversion into digital form by means of an analogue/digital converter 7, to a processing unit 8 constituted, for example, by a mini-processor or a personal computer.

The laser 2 emits radiation pulses of duration $\tau$ and this provides the system with a spatial resolution equal to $\Delta R = c \tau/2$, where c is the speed of light in the medium.

In general, as regards the parts 3 to 8, the system according to the invention can be formed by components of known type. This is also true of the laser source 2 whose main characteristic, within the scope of the invention, is the fact that it can operate at several frequencies.

Emissions at various wavelengths (simultaneously or in sequence) can be achieved according to various criteria either by the incorporation of various sources in the laser 2 each operating at a respective wavelength, or with the use of a single laser source and the interposition of optically-active means 2b between the emission source 2 a and the lens 3 for projecting the beam into the atmosphere, which can vary selectively the wavelength $\lambda_i$ of the radiation projected into the atmosphere.

The intensity of the back-scattered signal picked up by the telescope 4 and transmitted through the components 5 to 7 to the computer 8 corresponds, for each wavelength $\lambda_i$, to the term $M(D, \lambda_i)$ in equation (10).

For each value of the wavelength $\lambda_i$ a corresponding value of $M(D, \lambda_i)$ will therefore be available at the input to the computer 8.

The computer 8 has available within it values of the various coefficients in equation (10) for the different wavelengths considered, as well as processing programs for calculating the quantities

$$\sigma^{ext,M}_{\lambda_i} \quad \text{and} \quad Q^{scatt}_{\lambda_i,\theta}$$

(programs known, for example, from the Bohren-Huffman text cited above) as well as further programs (developed according to criteria known to experts in the art, or even currently available in the so-called "libraries" of some processing systems) for solving the algebraic equations represented by equation (10).

The system formed by the set of relationships which are analogous to equation (10) and which can be determined for the various wavelengths $\lambda_i$, is a system of equations whose unknown are the moments $m_j$ of the distribution R (a) to be determined and is composed of the same number of equations as the number of wavelength measurements.

Such a system is determinate and can therefore be solved when there are the same number of equations as there are moments to be calculated, the unknown distribution R(a) being derivable from these moments.

Naturally, the distribution is known more precisely the greater the number of moments which can be calculated and thus the greater the number of measurements made at different wavelengths $\lambda_i$.

Since the number of measurements clearly cannot be infinite (due to obvious physical limitations) a limit must be set on the number of detections at different wavelengths.

Experiments carried out by the Applicant show that, at least in most cases, the series expansion of the distribution R(a) as a function of its moments converges quite rapidly: in other words, this means that a knowledge of the first moments is generally sufficient to give a good idea of the distribution R(a) to be investigated.

Naturally it is possible to determine the degree of convergence and make a corresponding decision on the number of measurements to be carried out according to specific requirements.

For example, it has been found that, at least in some cases (a clear atmosphere, slight fog and the presence of cumulus), the use of only two wavelengths is sufficient.

The experimental arrangement used includes a Lambda Physik EMG 203 excimer laser used for pumping a two-frequency coloured laser (Rh6G) through a BBO-type crystal so as to generate two wavelengths at 598.8 and 299.4 nm respectively simultaneously. The energy available per pulse was approximately 4 mJ with a repetition frequency of approximately 250 Hz. The receiver system consisted of a telescope 4 with a 30 cm diameter Cassegrain mounting, an iris, and various filters for cutting out ambient light and a 5EMI 9817QB photo multiplier.

The signal was converted into digital form by a transient analyser (Tektronic RTD 710) and sent for processing to an IBM Personal Computer.

With a clear atmosphere, an average dimension $\bar{a}$ of 0.47 micrometers was detected, corresponding to an average concentration of 32 particles per $cm^3$.

In the presence of cumulus, an average dimension $\bar{a}$ of 12.5 micrometers was detected, corresponding to a concentration of 4 particles per $cm^3$.

These results match well with similar results obtained by more complex conventional methods.

Naturally, the principle of the invention remaining the same, the forms of embodiment and details of construction may be varied widely with respect to those described and illustrated, without thereby departing from the scope of the present invention.

## Claims

1. A method for determining at least one random characteristic of scattering sources struck by a plane wave, in which the scattering of the plane wave can be modelled, in general, by means of at least one coefficient ( $\alpha$ ($\lambda$, $\theta$) which can be expressed by a given equation of the type:

$$\alpha (\lambda, \theta) = \int_0^\infty f_{\lambda, \theta} (a) \, \rho(a) \cdot da$$

where
- $\lambda$ is the wavelength of the plane wave,
- $\theta$ is the scattering angle,
- $\rho$ (a) is the probability density corresponding to the distribution R(a) which identifies the random characteristic, and
- $f_{\lambda, \theta}$ (a) is a known function characteristic of the propagation of the wave,
characterised in that it comprises the steps of:
- detecting the coefficient ( $\alpha(\lambda, \theta)$ ) for a plurality of different wavelengths ( $\lambda_i$),
- determining, for each wavelength ( $\lambda_i$), the value of the coefficient ( $\alpha$ ( $\lambda_i$, $\theta$)); this value being expressible in general, by an expansion of the type

$$\alpha (\lambda, \theta) = \sum_{j=0}^\infty \frac{m_j}{j!} \cdot f_{\lambda, \theta}^{(j)} (0) = \sum_{j=0}^\infty m_j \cdot c_j$$

where $m_j$ (j = 0....n) represents the j-order moment of the probability distribution R ( a ) and

$$f_{\lambda, \theta}^{(j)}$$

(0) is the j-order derivative, calculated for a = 0, of the known function $f_{\lambda, \theta}(a)$, so as to generate a system of equations comprising a number of equations equal to the number of different wavelengths ( $\lambda_i$) for which measurements are made, and the same number of unknown moments ($m_j$),
- solving the system of equations so as to determine a corresponding number of moments ($m_j$) of the

probability distribution R(a), and

- calculating (8) the probability distribution R(a) from the moments $(m_j)$.

2. A method according to Claim 1, characterised in that it includes the steps of:

- directing (2) a plane wave (L) with a plurality of wavelengths ($\lambda_i$) towards the scattering sources (A),

- detecting (4 to 7) the intensity of the scattered wave for each wavelength ($\lambda_i$), the intensity being indicative of the value of the coefficient ($\alpha(\lambda,\theta)$) at the respective wavelength ($\lambda_i$).

3. A method according to Claim 1 or Claim 2, applied to a scattering process which can be modelled by means of a further equation of the type:

$$\frac{M(D,\lambda)}{\beta(\lambda)} = K.\ \exp.\ [-2D\ \alpha^{ext}\ (\lambda)]$$

where:

-M (D, $\lambda$) and K are quantities which can be measured experimentally and $\alpha^{ext}$ ($\lambda$) and $\beta$ ( $\lambda$ ) are coefficients which can each be expressed by a respective given equation,

- determining, for each wavelength $\lambda_i$, the values of the quantities M(D, $\lambda$) and K, as well as the values of the coefficients $\alpha^{ext}(\lambda)$ and $\beta$ ($\lambda$); the coefficients both, in general, being expressible by a respective expansion as functions of the moments $(m_j)$ of the probability distribution R(a), so as to generate a system comprising the same number of equations as the number of different wavelengths ( $\lambda_i$) for which measurements are made, and the same number of unknown moments $(m_j)$

- solving the system of equations so as to determine a corresponding number of moments $(m_j)$ of the probability distribution R(a), and

- calculating (8) the probability distribution from the moments $(m_j)$.

4. A device for carrying out a method according to any one of the preceding claims, characterised in that it comprises:

- a source (2) for generating said plane wave (L) at a plurality of different wavelengths ( $\lambda_i$),

- means (4 to 7) for detecting the coefficient ($\alpha$ ($\lambda,\theta$)) for each wavelength ( $\lambda_i$), and

- processing means (8) for solving the system of equations and calculating the probability distribution R(a) from the moments $(m_j)$.

5. A device according to Claim 4, characterised in that the source (2) in a laser operating at different wavelengths.